# EUROPEAN PATENT SPECIFICATION

(11) **EP 3 210 663 B1**
(45) Date of publication and mention of the grant of the patent: **04.03.2020**
(21) Application number: 15871643.1
(22) Date of filing: 25.06.2015
(51) Int. Cl.: B01D 19/04, B01F 17/54, C08L 71/02, C08L 83/12

(54) **ORGANIC SILICON COMPOSITION, AND PREPARATION AND USE THEREOF**
ORGANISCHE SILICIUMZUSAMMENSETZUNG UND HERSTELLUNG UND VERWENDUNG DAVON
COMPOSITION DE SILICIUM ORGANIQUE, ET PRÉPARATION ET UTILISATION DE CELLE-CI

(30) Priority: 24.12.2014 CN 201410814255
(43) Date of publication of application: 30.08.2017
(73) Proprietor: Jiangsu Sixin Scientific-Technological Application Research Institute Co., Ltd., Nanjing Jiangsu 210027 (CN)
(72) Inventor: HOU, Wei, Nanjing Jiangsu 210027 (CN); WU, Fei, Nanjing Jiangsu 210027 (CN); CAO, Tian, Nanjing Jiangsu 210027 (CN); HUANG, Wei, Nanjing Jiangsu 210027 (CN); YANG, Youzhong, Nanjing Jiangsu 210027 (CN)
(74) Representative: Laufhütte, Dieter
(86) International application number: PCT/CN2015/082284
(87) International publication number: WO 2016/101568

(56) References cited:
- CN-A- 101 884 852
- CN-A- 102 489 048
- CN-A- 103 111 100
- CN-A- 103 819 630
- CN-A- 104 436 767
- US-A1- 2011 294 714
- US-B1- 6 512 015

## Description

### BACKGROUND

### Technical Field

The present invention relates to the technical field of fine chemicals, and provides a high-content foam control agent for liquid detergents, which has a good foam control effect in the detergent, while the clarity of the detergent is better maintained.

### Related Art

Liquid detergents are necessities in daily life, and have unique advantages of convenience in use, rapid dissolution, being mild for the fabric and skin, and others. The surfactant has a foam stabilizing effect, causing the difficulty in washing off the bubbles, which not only causes a waste of the water resources and increases the cost of laundry, but also cause large-scale water pollution. This is not conducive to energy conservation and environmental protection. At present, this problem is generally solved by adding a siloxane defoamer to a detergent mixture. However, in addition to the foam control effect, the stability and clarity of the silicone defoamer in the detergent are other two properties that need to be investigated.

EP1753853B1 discloses a low foaming liquid detergent composition, in which the foam control effect is achieved by adding an ethoxylated fatty acid diester to the liquid detergent without causing clouding; however, the foam control effect is not as good as that of the silicone defoamers. CN 103272411 A relates to a foam inhibitor and a preparation method thereof. The method comprises the steps of: obtaining a polyorganosiloxane co-modified with an alkyl and an unsaturated polyether by reacting a hydrogen-containing polyorganosiloxane, the unsaturated polyether, and an α-olefin in the presence of an acid catalyst; then treating by adding a mixture of hydrophobic particles and a silicone resin, to obtain an active ingredient of a foam inhibitor; preparing the active ingredient into an O/W defoamer emulsion with the aid of an emulsifier; and then adding it to a non-structural detergent, whereby the problem related to clarity is effectively solved.

EP1075 863 and EP1075 864 disclose a high-content foam control agent for liquid detergents, comprising a organopolysiloxane material, a silicone resin and a hydrophobic filler. The organopolysiloxane material comprises a organopolysiloxane having at least one silicon-bonded substituent of formula X-Ar, where X represents a divalent aliphatic group bonded to silicon through a carbon atom and Ar represents an aromatic group. The organopolysiloxane is selected from a organopolysiloxane composed of siloxane units having the formula RaSiO_{(4-a)/2}, where R represents a hydroxyl group, a hydroxyloxy group or a hydroxyl group, and a has an average of 0.5 to 2.4. CN102307978 discloses a foam inhibitor comprising, based on EP1075 864, an organopolysiloxane resin having at least one polyoxyalkylene group, comprising a tetrafunctional siloxane unit of formula RSiO4/2 and a monofunctional siloxane unit of formula R3SiO4/2, where the total number of the tetrafunctional siloxane units in the silicone resin is at least 50% based on the total number of the siloxane units and R represents a hydroxyl group. When this liquid foam inhibitor is used in a heavy duty liquid (HDL) detergent, the problems related to the stability and the foam control performance of the compositions in the detergent are solved. However, the turbidity of the liquid detergent is increased as far as the appearance is concerned. CN1215162C discloses a siloxane-based foam control composition comprising a siloxane antifoaming agent and silica dispersed in a detergent compatible carrier. A siloxane-based antifoaming agent is mixed with silica, and then the mixture was added to a continuous phase composed of an alkylpolyglycoside preparation, a branched alcohol ethoxylate, siloxane-polyether and water. A low phase separation rate is displayed, due to the well matched density.

In view of the development trend of detergent products, the environment-friendly and concentrated detergent products will be the trend of development in the whole household chemicals and detergent market in the future, and high concentration of products also have enormous benefits for the enterprises and the environment, such as reduced transportation and package costs, reduced energy consumption, and reduced carbon dioxide emissions. For the defoamer products, concentrated defoamer also has the advantages of low cost and high performance. However, in view of the problem related to stability of high-content defoamers and high turbidity when they are added to the liquid detergent, such products are in shortage in the market.

### SUMMARY

The present invention provides a high-content silicone defoamer composition having a particular assembled structure, prepared by making use of the good packing and dispersing effect of a combination of a cross-linked polyether-polydiorganosiloxane and a branched polyether-polydiorganosiloxane synergized with a polyether polyol on a silicone composition having an alkyl structure, which has excellent clarity and stability in a liquid detergent. A desirable foam control effect can be achieved when the high-content silicone defoamer composition is added in a small amount to the liquid detergent.

The following technical solutions are employed in the present invention. A silicone defoamer composition comprises the following.

### A. Silicone active material

The silicone active material mentioned in the present invention is prepared with a hydrogen-containing polyorganosiloxane, an acrylate, an α-olefin, a catalyst, a silica, and a silicone resin by techniques well known to those skilled in the art.

In a solution, the content of the silicone composition in the defoamer composition is 5-40 parts by weight, preferably 5-35 parts by weight, and more preferably 8-25 parts by weight.

### A(I): Hydrogen-containing polyorganosiloxane

The hydrogen-containing polyorganosiloxane is at least a hydrogen-containing polyorganosiloxane having a general structural formula blow:

HₖMe₃₋ₖSiO(MeHSiO)ᵥ(Me₂SiO)_{w}SiMe₃₋ₖHₖ

where Me is methyl, the subscript k is 0 or 1, v is an integer from 2 to 100, and w is an integer from 20 to 300; each molecule has at least 2 silicon-bonded hydrogen atoms; and the content of the hydrogen-containing polyorganosiloxane in the silicone composition is 40 to 80 parts by weight.

### A(II): α-olefin

The α-olefin has a general structural formula blow:

Vi(CH₂)ₜH

where Vi is vinyl, t is an integer from 1 to 36, and preferably an integer from 6 to 18. In a solution, the content of the α-olefin in the silicone composition is 10-30 parts by weight.

### A(III): Acrylate

The acrylate is an ester of acrylic acid and its homologues, including methyl acrylate, ethyl acrylate, butyl acrylate, isobutyl acrylate, methyl 2-methacrylate, ethyl 2-methacrylate or butyl 2-methacrylate. In a solution, the content of the acrylate in the silicone composition is 3-15 parts by weight.

### A(IV): Catalyst

The catalyst is selected from a platinum-alcohol complex, a platinum-olefin complex, a platinum-alkoxide complex, a platinum-ether complex, a platinum-ketone complex, a chloroplatinic acid solution in isopropanol or a platinum-vinyl complex, and preferably a chloroplatinic acid solution in isopropanol in which the platinum content is from 1 to 20 ppm. In a solution, the amount of the catalyst in the silicone compositionl is 0.01-0.2% by weight.

### A(V): Silica

The silica comprises fumed silica or precipitated silica having a specific surface area of 50-500 m²/g, which may or may not receive hydrophobic treatment. In the present invention, precipitated silica or fumed silica having a specific surface area of 90 to 300 m²/g is preferred. In a solution, the content of the silica in the silicone composition is 1-15 parts by weight

### A(VI): Silicone resin

The silicone resin is a polyorganosiloxane having highly cross-linked spatial network structure. The polyorganosiloxane with a network structure is a product generally obtained by hydrolyzing various mixtures of methyltrichlorosilane, dimethyldichlorosilane, phenyltrichlorosilane, diphenyldichlorosilane or methylphenyldichlorosilane in an organic solvent such as toluene, to obtain an acid-hydrolyzed product, which is then washed with water to remove the acid. The silicone resin used in the present invention is an MQ resin composed of a unit comprising the segment CH₃SiO_{1/2} (known as the unit M in organic chemistry) and the segment SiO_{4/2} (the unit Q), in which the molar ratio of the unit M to the unit Q is (0.4-1.2):1.0, and preferably (0.5-0.8). In a solution, the content of the MQ resin in the silicone composition is 5-20 parts by weight.

The silicone composition A (the component A) may be prepared through a method known in prior art. The present invention also provides a method for preparing the silicone composition, which includes specifically: mixing the hydrogen-containing polyorganosiloxane with the acrylate uniformly, adding the catalyst at 70°C, heating the system to 100°C and maintaining at 100°C for 1 hr, then adding the α-olefin, maintaining at 100°C for additional 2 hrs, and finally treating by adding a mixture of the silica and the silicone resin, to obtain the silicone composition.

### B. Polyether-polydiorganosiloxane

The polyether-polydiorganosiloxane is a combination of three or more polyether-polydiorganosiloxanes having the following general structural formula, where c≠0 in at least two of the polyether-polydiorganosiloxanes. In the defoamer composition, the content of the polyether-polydiorganosiloxane is 10-70 parts by weight, preferably 15-60 parts by weight, and more preferably 15-40 parts by weight.

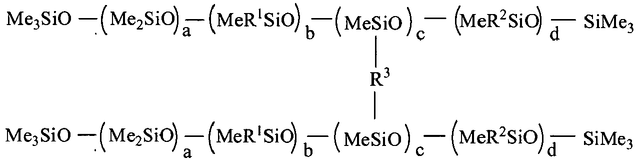

In the formula, Me is methyl, a is an integer from 20 to 300, b is an integer from 2 to 100, c is an integer from 0 to 100, d is an integer from 2 to 100; R¹ represents a polyether segment, which is a copolymer obtained through copolymerization of ethylene oxide-propylene oxide; R² is an aliphatic hydrocarbon group having a structural formula of -(CH₂)_{z}H where z is an integer from 1 to 36; and R³ is a crosslinking agent, and preferably a polydimethylsiloxane terminated with two vinyl groups.

More specifically:
the R¹ segment is grafted to the siloxane backbone through silicon-hydrogen addition reaction of the polyether having an unsaturated double bond with Si-H, in which the polyether having an unsaturated double bond has a general formula:

CH₂=CHCH₂O(EO)ₓ(PO)_{y}R⁴

where R⁴ is hydrogen, an alkyl group having 1 to 6 carbon atoms, an ester group, epoxy, or amino; EO is ethylene oxide, PO is propylene oxide, x and y are degrees of polymerization, x is an integer from 0 to 150, and preferably an integer from 0 to 40; y is an integer from 0 to 150, and preferably an integer from 0 to 100; and x and y are not 0 at the same time.

The R² is an aliphatic hydrocarbon group having a structural formula of -(CH₂)_{z}H, which is grafted to the siloxane backbone through silicon-hydrogen addition reaction of an olefin having an unsaturated double bond with Si-H, in which the olefin having an unsaturated double bond is preferably an α-olefin having a structural formula of CH₂=CH(CH₂)_{z}H, where z is an integer from 1 to 36, and preferably 1 or an integer from 6 to 18.

The R³ is a polydimethylsiloxane terminated with two vinyl groups, from which a modified polysiloxane with a cross-linked structure is obtained through silicon-hydrogen addition reaction with Si-H. The polyorganosiloxane terminated with two vinyl groups has a general structural formula:

CH₂=CH(CH₃)₂SiO((CH₃)₂SiO)ₘSi(CH₃)₂CH=CH₂

in which m is an integer from 100 to 500, and preferably an integer from 200 to 400; and the polyorganosiloxane terminated with two vinyl groups has a kinematic viscosity of 50-2,000 mPa•s at 25°C.

In the present invention, the polyether-polydiorganosiloxane is obtained by reacting the modification groups R¹, R², and R³ with a hydrogen-containing polyorganosiloxane in the presence of a catalyst, in which the modification groups are grafted onto the backbone of the hydrogen-containing polyorganosiloxane through random polymerization.

The hydrogen-containing polyorganosiloxane is at least a hydrogen-containing polyorganosiloxane having a general structural formula below:

Me₃SiO(MeHSiO)ₚ(Me₂SiO)_{q}SiMe₃

where Me is methyl, p is an integer from 2 to 100, and preferably an integer from 10 to 70; q is an integer from 20 to 300, and preferably an integer from 40 to 200; each molecule has at least 2 silicon-bonded hydrogen atoms; and the kinematic viscosity of the hydrogen-containing polyorganosiloxane at 25°C is 20-5,000 mPa•s.

The catalyst is one selected from a platinum-alcohol complex, a platinum-olefin complex, a platinum-alkoxide complex, a platinum-ether complex, a platinum-ketone complex, a chloroplatinic acid solution in isopropanol or a platinum-vinyl complex. The catalyst in the method is preferably a chloroplatinic acid solution in isopropanol in which the platinum content is from 1 to 20 ppm. In a solution, the amount of the catalyst in the polyether-polydiorganosiloxane is 0.01 to 0.2% based on the total weight.

The silicone active material is a defoaming active ingredient; however, it needs to be dispersed into the liquid detergent with the aid of a polyether-polydiorganosiloxane, rather than be dispersed directly. The inventors find through experiments that the polyether-polydiorganosiloxane has a good packing and dispersing effect on silicone active materials with an aliphatic hydrocarbon group. A stable high-content silicone defoamer can be prepared with polyether-polydiorganosiloxanes of three different structures in combination.

The polyether-polydiorganosiloxanes of three different structures used in the present invention are materials having the following structures:
B1, where a is an integer from 20 to 300, b is an integer from 2 to 100, c is an integer from 2 to 100, and d is an integer from 2 to 100; R¹ represents a polyether segment obtained through copolymerization of ethylene oxide-propylene oxide, in which x is an integer from 0 to 150, and preferably an integer from 0 to 40, y is an integer from 0 to 150, and preferably an integer from 0 to 100, and x and y are not 0 at the same time; R² is an aliphatic hydrocarbon group having a structural formula of -(CH₂)_{z}H, where z is an integer from 6 to 18; R³ is a polyorganosiloxane terminated with two vinyl groups, in which m is an integer from 200 to 400. In a technical solution, the content of B1 in the defoamer composition is 5-40 parts by weight, preferably 5-35 parts by weight, and more preferably 8-25 parts by weight.
B2, where a is an integer from 20 to 300, b is an integer from 2 to 100, c is an integer from 2 to 100, and d is an integer from 2 to 100; R¹ represents a polyether segment, obtained through copolymerization of ethylene oxide-propylene oxide, in which x is an integer from 0 to 150, and preferably an integer from 0 to 40, y is an integer from 0 to 150, and preferably an integer from 0 to 100, and x and y are not 0 at the same time; R² is methyl; and R³ is a polyorganosiloxane terminated with two vinyl groups, in which m is an integer from 200 to 400. In a technical solution, the content of B2 in the defoamer composition is 2-30 parts by weight, preferably 5-25 parts by weight, and more preferably 5-20 parts by weight.
B3, where a is an integer from 20 to 300, b is an integer from 2 to 100, c is 0, and d is an integer from 2 to 100; R¹ represents a polyether segment, obtained through copolymerization of ethylene oxide-propylene oxide, in which x is an integer from 0 to 150, and preferably an integer from 0 to 40, y is an integer from 0 to 150, and preferably an integer from 0 to 100, and x and y are not 0 at the same time; and R² is an aliphatic hydrocarbon group having a structural formula of -(CH₂)_{z}H, where z is an integer from 6 to 18. The average kinematic viscosity of the polyether-polydiorganosiloxane at 25°C is 10-30,000 mPa•s and preferably 100-3,000mPa•s. In a technical solution, the content of B3 in the defoamer composition is 2-20 parts by weight, preferably 2-15 parts by weight, and more preferably 2-10 parts by weight.

B1 and B2 are cross-linked polyether-polydiorganosiloxanes, and obtained by adding a polyorganosiloxane terminated with two vinyl groups (that is, the crosslinking agent) for reaction during the preparation of the branched polyether-polydiorganosiloxane.

The average kinematic viscosity of the cross-linked polyether-polydiorganosiloxane at 25°C is 20-40,000 mPa•s, and preferably100-4,000 mPa•s.

The cross-linked polyether-polydiorganosiloxane has excellent emulsifying and packing abilities, which enable the silicone active material to be dispersed in a liquid detergent to some extent. This is further enhanced by the component C, such that the silicone active material is stably dispersed in the liquid detergent.

### C. Polyether polyol

The polyether polyol is a combination of three or more polyether polyols having the following structural formulas. In the defoamer composition, the content of the polyether polyol is 10-80 parts by weight, preferably 20-70 parts by weight, and more preferably 35-65 parts by weight.

R⁵[(EO)ₕ(PO)ₙH]_{g},

In the formula, the subscript g is an integer from 1 to 6, and preferably an integer from 1 to 3; EO is ethylene oxide, and PO is propylene oxide; R⁵ is a residue of a polyether initiator after reaction, in which the initiator is a C1-C30 linear or branched alkyl alcohol, and preferably a C16-C18 linear alkyl alcohol, ethylene glycol, propylene glycol, glycerol, and glyceryl trimethylolpropane; and h and n are degrees of polymerization, h is an integer from 1 to 100, and preferably an integer from 1 to 40, n is an integer from 0 to 80, and preferably an integer from 0 to 60.

In the present invention, the polyether is added in two steps. The order of addition may contribute to the layered assembled structure of the silicone defoamer. When the order of adding polyethers is changed, the layered assembled structure of the defoamer composition is destroyed, which will ultimately affect the stability of the defoamer and cause the non-uniform density distribution, layer separation and so on.

In the first step, the following is added:
C1, where g is 1, h is 0 and n is preferably an integer from 5 to 40, and the initiator is propylene glycol. In a technical solution, the content of C1 in the defoamer composition is 5-50 parts by weight, preferably 10-40 parts by weight, and more preferably 15-35 parts by weight.

In the second step, the following are added:
C2, where g is 3, h is preferably an integer from 0 to 40, and n is preferably an integer from 0 to 80; and the initiator is glycerol. In a technical solution, the content of C2 in the defoamer composition is 2-40 parts by weight, preferably 5-35 parts by weight, and more preferably 5-20 parts by weight; and
C3, where g is 1, h is preferably an integer from 0 to 40, and n is preferably an integer from 0 to 80; and the initiator is a C16-C18 linear alkyl alcohol. In a technical solution, the content of C3 in the defoamer composition is 2-40 parts by weight, preferably 5-35 parts by weight, and more preferably 5-20 parts by weight.

In a technical solution, the defoamer according to the present invention is specifically formulated through a method including the steps of:
(1) mixing the silicone active material A with the polyether-polydiorganosiloxanes B1, B2, and B3, heating to 50-150°C, and stirring for 0.5-1.5 hrs at a speed of 100-600 rpm;
(2) adding the polyether polyol C1 with stirring while the temperature is kept unchanged; and
(3) homogenizing the mixture by a colloid mill, combining the mixture with the polyether polyols C2 and C3, and stirring until uniform, to obtain a defoamer product.

The crosslinked modified polyorganosiloxanes B1 and B2 and the branched modified polyorganosiloxane B3 are used in the preparation of a defoamer of a silicone composition with an alkyl modification group. By means of the compatibility and synergism between the three components, and the further dispersing effect of a polyether polyol, a stable high-content defoamer is prepared. The prepared defoamer added to a liquid detergent has a desirable clarity and stability, and a desirable foam control effect can be achieved with a small amount. This may be attributed to the special structure of B1, since the crosslinked structure of the modified polyorganosiloxane has a strong emulsifying and dispersing capability, with which the silicone composition A can be effectively packaged and dispersed; and the alkyl structure on the side chain is similar to the alkyl structure on the side chain of the silicone composition, and thus a good affinity is exhibited, which ensures the stability of the defoamer.

The effect of the polyether polyol is primarily to further disperse the defoamer component, reduce the viscosity of the composition and make it easy to disperse in the liquid detergent. Compared with the situation where a polyether polyol is used alone, the effect is significantly better when two or more polyether polyols are used in combination. Moreover, the order of adding the polyether polyols also affects the performance of the defoamer composition, especially in terms of the stability. The order of addition may contribute to the layered assembled structure of the silicone defoamer. When the order of adding polyethers is changed, the layered assembled structure of the defoamer composition is destroyed, which will ultimately affect the stability of the defoamer and cause the non-uniform density distribution, layer separation and so on.

### DETAILED DESCRIPTION

### Component A: Silicone active material

The silicone active material A1 was prepared as follows.

A hydrogen-containing polyorganosiloxane (Me₃SiO(MeHSiO)₁₅(Me₂SiO)₄₅SiMe₃, 50 g) was uniformly mixed with methyl acrylate (12 g), and a chloroplatinic acid solution in isopropanol (where the platinum content was 10-15 ppm) was added as a catalyst at 70°C, in an amount of 0.05% by weight of the composition. The system was heated to 100°C and maintained at this temperature for 1 hr. An α-olefin (Vi(CH₂)₈H, 28 g) was added, and finally a mixture of precipitated silica (60 m²/g, 13 g) and a MQ silicone resin (5 g, M:Q 0.5 :1.0 (molar ratio)) was added for treatment.

The silicone active material A2 was prepared as follows.

A hydrogen-containing polyorganosiloxane (HMe₂SiO(MeHSiO)₆₅(Me₂SiO)₁₉₀SiMe₂H, 60 g) was uniformly mixed with methyl acrylate (14 g), and a chloroplatinic acid solution in isopropanol (where the platinum content was 10-15 ppm) was added as a catalyst at 69°C, in an amount of 0.05% by weight of the composition. The system was heated to 100°C and maintained at this temperature for 1 hr. An α-olefin (Vi(CH₂)₁₆H, 20 g) was added, and finally a mixture of fumed silica (80 m²/g, 10 g) and a MQ silicone resin (10 g, M:Q 0.6: 1.0 (molar ratio)) was added for treatment.

The silicone active material A3 was prepared as follows.

A hydrogen-containing polyorganosiloxane (HMe₂SiO(MeHSiO)₁₀₀(Me₂SiO)₁₇₀SiMe₂H, 70 g) was uniformly mixed with ethyl acrylate (10 g), and a chloroplatinic acid solution in isopropanol (where the platinum content was 10-15 ppm) was added as a catalyst at 71°C, in an amount of 0.05% by weight of the composition. The system was heated to 100°C and maintained at this temperature for 1 hr. An α-olefin (Vi(CH₂)₁₂H, 12 g) was added, and finally a mixture of fumed silica (100 m²/g, 3 g) and a MQ silicone resin (20 g, M:Q 0.7:1.0 (molar ratio)) was added for treatment.

### Component B: Polyether-polydiorganosiloxane

**Table 1. Values for variables in polyether-polydiorganosiloxane**

| | a | b | c | d | x | y | z | m | Kinematic viscosity/ mPa•s |
|---|---|---|---|---|---|---|---|---|---|
| B1-1 | 120 | 3 | 100 | 45 | 0 | 70 | 6 | 200 | 3950 |
| B1-2 | 20 | 45 | 15 | 50 | 20 | 0 | 12 | 400 | 100 |
| B1-3 | 300 | 65 | 50 | 2 | 40 | 100 | 16 | 250 | 250 |
| B1-4 | 220 | 100 | 35 | 100 | 30 | 50 | 18 | 350 | 220 |
| B2-1 | 120 | 2 | 100 | 45 | 0 | 70 | 1 | 250 | 3950 |
| B2-2 | 20 | 50 | 15 | 50 | 20 | 0 | 1 | 320 | 100 |
| B2-3 | 300 | 60 | 50 | 3 | 40 | 98 | 1 | 200 | 1120 |
| B2-4 | 220 | 100 | 35 | 95 | 30 | 50 | 1 | 400 | 2450 |
| B3-1 | 120 | 6 | 0 | 45 | 0 | 70 | 8 | n.a. | 100 |
| B3-2 | 20 | 50 | 0 | 50 | 20 | 0 | 12 | n.a. | 250 |
| B3-3 | 300 | 60 | 0 | 3 | 40 | 98 | 16 | n.a. | 490 |
| B3-4 | 220 | 100 | 0 | 100 | 30 | 50 | 18 | n.a. | 2950 |
| B4 | 200 | 80 | 0 | 45 | 15 | 20 | 1 | n.a. | 1560 |

### Preparation of component B:

The component B was obtained by reacting modification groups R¹, R², and R³ bearing an unsaturated double bond shown in Table 1 with a hydrogen-containing polyorganosiloxane in the presence of a chloroplatinic acid solution in isopropanol in which the platinum content was 1-20 ppm, where the modification groups were grafted to the backbone of the hydrogen-containing polyorganosiloxane through random polymerization. The hydrogen-containing polyorganosiloxane is at least a hydrogen-containing polyorganosiloxane having a general structural formula: Me₃SiO(MeHSiO)ₚ(Me₂SiO)_{q}SiMe₃, where Me is methyl, and b+c+d=p, a=q; each molecule has at least 2 silicon bonded hydrogen atoms; and the kinematic viscosity at 25°C is 20-5,000 mPa•s.

### Component C: Polyether polyol

**Table 2. Values for variables in polyether polyols**

| | h | n | g | Initiator |
|---|---|---|---|---|
| C1-1 | 0 | 7 | 1 | Propylene glycol |
| C1-2 | 0 | 14 | 1 | Propylene glycol |
| C1-3 | 0 | 35 | 1 | Propylene glycol |
| C2-1 | 12 | 0 | 3 | Glycerol |
| C2-2 | 25 | 70 | 3 | Glycerol |
| C2-3 | 38 | 40 | 3 | Glycerol |
| C3-1 | 40 | 0 | 1 | C16-C18 liner alkyl alcohol |
| C3-2 | 35 | 65 | 1 | C16-C18 liner alkyl alcohol |
| C3-3 | 12 | 10 | 1 | C16-C18 liner alkyl alcohol |
| C4 | 40 | 50 | 3 | Glyceryl trimethylolpropane |
| C5 | 25 | 30 | 2 | Ethylene glycol |

### Examples 1-10

The defoamer products in Examples 1-10 were prepared according to the composition in Table 3.

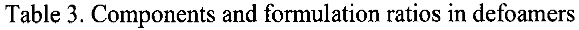

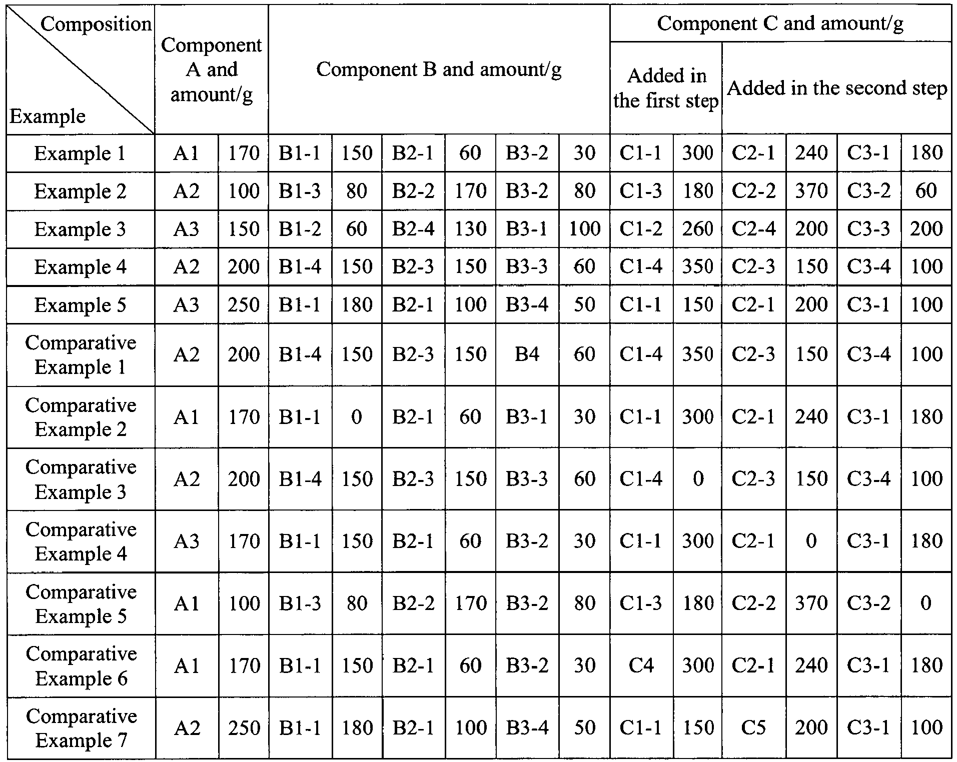

### Preparation method of Examples 1-2

The metered components A and B in Table 3 prepared through a generally known method were mixed, heated to 55°C, and stirred for 0.5 hr at a speed of 150 rpm. C1 was added while the temperature was kept unchanged, stirred until uniform, and homogenized by using a colloid mill. C2 and C3 were added and stirred until uniform, to obtain a defoamer composition.

### Preparation method of Examples 3-5

The metered components A and B in Table 3 prepared through a generally known method were mixed, heated to 145°C, and stirred for 1.5 hrs at a speed of 550 rpm. C1 was added while the temperature was kept unchanged, stirred until uniform, and homogenized by using a colloid mill. C2 and C3 were added and stirred until uniform, to obtain a defoamer composition.

The preparation method of Comparative Examples 1-7 were similar to that of Examples 1-2. The metered components A and B in Table 3 prepared through a generally known method were mixed, heated to 55°C, and stirred for 0.5 hr at a speed of 150 rpm. C1 was added while the temperature was kept unchanged, stirred until uniform, and homogenized by using a colloid mill. C2 and C3 were added and stirred until uniform, to obtain a defoamer composition.

Comparative Example 8: The metered components A and B prepared through a generally known method as described in Example 1 were mixed, heated to 55°C, and stirred for 0.5 hr at a speed of 150 rpm. The order of adding polyether polyols was changed. C2 and C3 were added first and stirred until uniform. Then C1 was added, homogenized by using a colloid mill, and stirred until uniform, to obtain a defoamer composition.

Comparative Example 9: The metered components A and B prepared through a generally known method as described in Example 1 were mixed, heated to 55°C, and stirred for 0.5 hr at a speed of 150 rpm. C1, C2, and C3 were added simultaneously, stirred until uniform, homogenized by using a colloid mill, and stirred until uniform, to obtain a defoamer composition.

### Comparative Example 10: see Example 1 of CN 104130879A

### Performance test of silicone defoamer:

(1) Stability test: The silicone defoamer composition was cyclically stood at -18°C-40°C for one week, two weeks, and four weeks at an interval of 12 hrs. The test results are shown in Table 4.
Visual inspection was based on the following ratings:
1= good fluidity, and no precipitation and layer separation.
2= good fluidity; and precipitation of visible small siloxane.
3= non-uniform density distribution, and clustering of large siloxane.
4= obvious layer separation

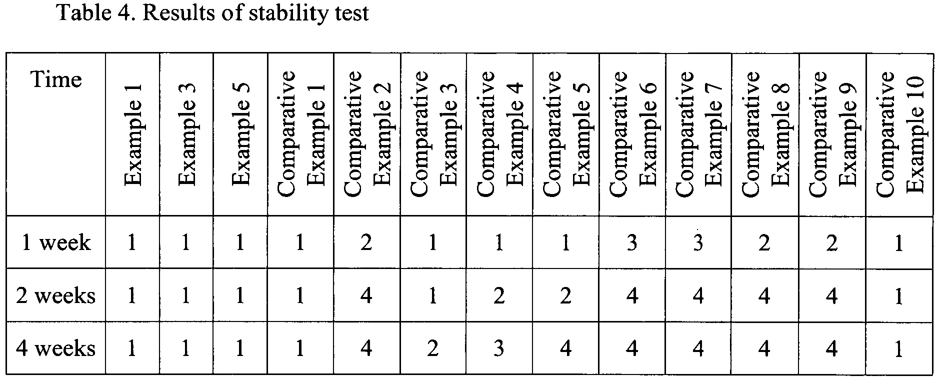

(2) Test of machine wash performance of the defoamer in liquid detergents
50 g of a commercially available detergent, 0.1 g of the prepared silicone composition and 20 kg of water were added to a Zanussi drum-type washing machine (ZWH6125), and the test program was linen textile washing program. Metric scales 0%-100% are marked on the window of the washing machine, which are 0, 25%, 50%, 75%, and 100% of the height of the window respectively. "0" is a starting value and indicates no foam, "100%" indicates that the window is full of foam. The height of the foam was recorded every 5 minutes and at the time of shutdown. A larger value indicates a higher scale value of the foam in the washing machine, and a poorer foam inhibition performance. A lower scale value of the foam in the same time indicates a better foam inhibition performance. The test results are shown in Table 5

**Table 5. Test results of machine wash performance of the defoamer in liquid detergents**

| Time/min | 5 | 10 | 15 | 20 | 25 | 30 | 35 | 40 | 45 | 50 |
|---|---|---|---|---|---|---|---|---|---|---|
| Example 1 | 12 | 16 | 19 | 23 | 24 | 26 | 29 | 31 | 33 | 35 |
| Example 2 | 10 | 16 | 20 | 22 | 23 | 25 | 27 | 29 | 31 | 33 |
| Example 3 | 12 | 17 | 22 | 24 | 25 | 28 | 31 | 34 | 36 | 36 |
| Example 4 | 13 | 17 | 22 | 24 | 25 | 27 | 29 | 33 | 35 | 38 |
| Example 5 | 13 | 19 | 24 | 26 | 29 | 32 | 36 | 38 | 39 | 40 |
| Comparative Example 1 | 13 | 19 | 24 | 26 | 29 | 32 | 36 | 38 | 39 | 40 |
| Comparative Example 2 | 17 | 24 | 29 | 33 | 39 | 44 | 49 | 53 | 57 | 64 |
| Comparative Example 3 | 15 | 21 | 25 | 30 | 33 | 35 | 38 | 40 | 42 | 45 |
| Comparative Example 4 | 16 | 21 | 27 | 32 | 35 | 37 | 41 | 44 | 46 | 49 |
| Comparative Example 5 | 13 | 20 | 23 | 26 | 29 | 32 | 35 | 38 | 39 | 40 |
| Comparative Example 10 | 17 | 24 | 29 | 33 | 37 | 43 | 48 | 54 | 56 | 59 |

(3) Turbidity test: The silicone defoamer composition was added to a liquid detergent sample at a content of 0.2%, stirred uniformly and stood until no bubbles were present. The turbidity was test by using a HK-288 benchtop turbidity meter (unit: NTU). A larger turbidity indicates that the mixture is cloudier. The test result is shown in Table 6

**Table 6. Turbidity test result**

| | Turbidity/NTU |
|---|---|
| Commercially available liquid detergent | 5.4 |
| Example 1 | 11.3 |
| Example 2 | 10.8 |
| Example 3 | 11.7 |
| Example 4 | 13.9 |
| Example 5 | 14.1 |
| Comparative Example 1 | 19.3 |
| Comparative Example 3 | 35.7 |
| Comparative Example 4 | 29.1 |
| Comparative Example 5 | 21.8 |
| Comparative Example 10 | 24.8 |

Examples 1 to 5 have similar foam control effects and have a small turbidity. Comparative Examples 1-7 indicate that changes and substitutions made to the structure of any of these components have a large influence on the stability and clarity. Comparative Examples 8 and 9 indicate that layer separation of the composition is caused when the order of adding polyether polyols is changed, suggesting that the prepared defoamer may have a layered assembled structure, and changing the order of addition destroys the structure of the defoamer composition, causing layer separation. Comparative Example 10 is an O/W emulsion product, which has reduced clarity and foam control effect and is not conducive to transportation and energy saving and environment protection, compared with the prepared product.

## Claims

1. A silicone defoamer composition, comprising:
A. a silicone active material, having a content of 5-40 parts by weight in the defoamer composition, wherein the silicone active material of the component A is prepared with a hydrogen-containing polyorganosiloxane, an acrylate, an α-olefin, a catalyst, a silica, and a silicone resin;
B. polyether-polydiorganosiloxanes,
wherein the polyether-polydiorganosiloxane has a general structural formula below, and has a content of 10-70 parts by weight in the defoamer composition: 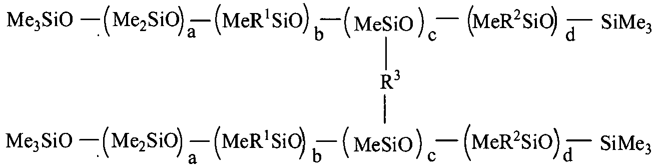
where Me is methyl, a is an integer from 20 to 300, b is an integer from 2 to 100, c is an integer from 0 to 100, and d is an integer from 2 to 100;
R¹ represents a polyether segment, which is a copolymer obtained through copolymerization of ethylene oxide-propylene oxide, and is grafted to the siloxane backbone through silicon-hydrogen addition reaction of the polyether having an unsaturated double bond with Si-H, in which the polyether having an unsaturated double bond has a general formula: CH₂=CHCH₂O(EO)ₓ(PO)_{y}R⁴, where R⁴ is hydrogen, an alkyl group having 1 to 6 carbon atoms, an ester group, epoxy, or amino; EO is ethylene oxide, PO is propylene oxide, x and y are degrees of polymerization, x is an integer from 0 to 150, and preferably an integer from 0 to 40; y is an integer from 0 to 150, and preferably an integer from 0 to 100; and x and y are not 0 at the same time;
R² is an aliphatic hydrocarbon group having a structural formula of -(CH₂)_{z}H where z is an integer from 1 to 36, which is specifically grafted to the siloxane backbone through silicon-hydrogen addition reaction of an olefin having an unsaturated double bond with Si-H, in which the olefin having an unsaturated double bond is an α-olefin having a structural formula of CH₂=CH(CH₂)_{z}H, where z is an integer from 1 to 36, and preferably 1 or an integer from 6 to 18;
R³ is a polydimethylsiloxane terminated with two vinyl groups, from which a modified polysiloxane with a cross-linked structure is obtained through silicon-hydrogen addition reaction of a polyorganosiloxane terminated with two vinyl groups with Si-H, where the polyorganosiloxane terminated with two vinyl groups has a general structural formula of CH₂=CH(CH₃)₂SiO((CH₃)₂SiO)ₘSi(CH₃)₂CH=CH₂, in which m is an integer from 100 to 500, and preferably an integer from 200 to 400; and the polyorganosiloxane terminated with two vinyl groups has a kinematic viscosity of 50-2,000 mPa•s at 25°C; and
the component B comprises polyether-polydiorganosiloxanes having the combination of following three different structures:
B1, where c is an integer from 2 to 100, z is an integer from 6 to 18, and m is an integer from 200 to 400;
B2, where c is an integer from 2 to 100, R² is methyl, and m is an integer from 200 to 400; and
B3, where c is 0 and z is an integer from 6 to 18; and the average kinematic viscosity at 25°C is 10 to 30,000 mPa•s, and preferably 100 to 3,000 mPa•s; and
C. a polyether polyol
wherein the polyether polyol has a general structural formula: R⁵[(EO)ₕ(PO)ₙH]_{g}; and the polyether polyol has a content of 10-80 parts by weight in the defoamer composition,
where the subscript g is an integer from 1 to 6, and preferably an integer from 1 to 3; h and n are degrees of polymerization, h is an integer from 1 to 100, and preferably an integer from 1 to 40, and n is an integer from 0 to 80, and preferably an integer from 0 to 60; EO is ethylene oxide, and PO is propylene oxide; R⁵ is a residue of a polyether initiator after reaction, in which the initiator is a C1-C30 linear or branched alkyl alcohol, and preferably a C16-C18 linear alkyl alcohol, ethylene glycol, propylene glycol, glycerol, and glyceryl trimethylolpropane; and
the component C comprises polyether polyols having the combination or more of following three different structures:
C1, where g is 1, h is 0, and n is an integer from 5 to 40; and the initiator is propylene glycol;
C2, where g is 3, h is an integer from 0 to 40, and n is an integer from 0 to 80; and the initiator is glycerol; and
C3, where g is 1, h is an integer from 0 to 40, and n is an integer from 0 to 80; and the initiator is a C16-C18 linear alkyl alcohol.

2. The silicone defoamer composition according to claim 1, wherein B1 and B2 are cross-linked polyether-polydiorganosiloxanes; and the average kinematic viscosity at 25°C is 20 to 40,000 mPa•s, and preferably 100 to 4,000 mPa•s.

3. The silicone defoamer composition according to claim 2, wherein the content of B1 in the defoamer composition is 5 to 40 parts by weight, preferably 5 to 35 parts by weight, and more preferably 8-25 parts by weight; the content of B2 in the defoamer composition is 2 to 30 parts by weight, preferably 5 to 25 parts by weight, and more preferably 5 to 20 parts by weight; the content of B3 in the defoamer composition is 2 to 20 parts by weight, preferably 2 to 15 parts by weight, and more preferably 2 to 10 parts by weight; the content of C1 in the defoamer composition is 5 to 50 parts by weight, preferably 10 to 40 parts by weight, and more preferably 15 to 35 parts by weight; the content of C2 in the defoamer composition is 2 to 40 parts by weight, preferably 5 to 35 parts by weight, and more preferably 5 to 20 parts by weight; and the content of C3 in the defoamer composition is 2 to 40 parts by weight, preferably 5 to 35 parts by weight, and more preferably 5 to 20 parts by weight.

4. The silicone defoamer composition according to claim 3, having a composition comprising:
A. the silicone active material, which has a content of 5-35 parts by weight in the defoamer composition;
B. the polyether-polydiorganosiloxane, which has a content of 15-60 parts by weight in the defoamer composition; and
C. the polyether polyol, which has a content of 20-70 parts by weight in the defoamer composition.

5. The silicone defoamer composition according to claim 4, having a composition comprising:
A. the silicone active material, which has a content of 8-25 parts by weight in the defoamer composition;
B. the polyether-polydiorganosiloxane, which has a content of 15-40 parts by weight in the defoamer composition; and
C. the polyether polyol, which has a content of 35-65 parts by weight in the defoamer composition.

6. The silicone defoamer composition according to claim 1, wherein the component B is prepared by reacting modification groups R¹, R², and R³ with a hydrogen-containing polyorganosiloxane in the presence of a catalyst, in which the modification groups are grafted onto the backbone of the hydrogen-containing polyorganosiloxane through random polymerization; the hydrogen-containing polyorganosiloxane is at least a hydrogen-containing polyorganosiloxane having a general structural formula below:
Me₃SiO(MeHSiO)ₚ(Me₂SiO)_{q}SiMe₃
where Me is methyl, p is an integer from 2 to 100, and preferably an integer from 10 to 70; q is an integer from 20 to 300, and preferably an integer from 40 to 200; each molecule has at least 2 silicon-bonded hydrogen atoms; and the kinematic viscosity of the hydrogen-containing polyorganosiloxane at 25°C is 20-5,000mPa•s.

7. The silicone defoamer composition according to claim 6, wherein the catalyst is at least one selected from a platinum-alcohol complex, a platinum-olefin complex, a platinum-alkoxide complex, a platinum-ether complex, a platinum-ketone complex, a chloroplatinic acid solution in isopropanol or a platinum-vinyl complex, and preferably a chloroplatinic acid solution in isopropanol in which the platinum content is from 1 to 20 ppm; and the amount of the catalyst in the polyether-polydiorganosiloxane is 0.01 to 0.2% based on the total weight.

8. The silicone defoamer composition according to claim 1, wherein the silicone active material of the component A is prepared with a hydrogen-containing polyorganosiloxane, an acrylate, an α-olefin, a catalyst, a silica, and a silicone resin below:
A(I): hydrogen-containing polyorganosiloxane:
wherein the hydrogen-containing polyorganosiloxane is at least a hydrogen-containing polyorganosiloxane having a general structural formula blow:
HₖMe₃₋ₖSiO(MeHSiO)ᵥ(Me₂SiO)_{w}SiMe₃₋ₖHₖ
where Me is methyl, the subscript k is 0 or 1, v is an integer from 2 to 100, and w is an integer from 20 to 300; each molecule has at least 2 silicon-bonded hydrogen atoms; and the content of the hydrogen-containing polyorganosiloxane in the silicone active material is 40 to 80 parts by weight;
A(II):α-olefin
wherein the α-olefin has a general structural formula blow:
Vi(CH₂)ₜH
where Vi is vinyl, t is an integer from 1 to 36, and preferably an integer from 6 to 18; and the content of the α-olefin in the silicone active material is 10-30 parts by weight;
A(III): acrylate
wherein the acrylate is an ester of acrylic acid and its homologues, including methyl acrylate, ethyl acrylate, butyl acrylate, isobutyl acrylate, methyl 2-methacrylate, ethyl 2-methacrylate or butyl 2-methacrylate; and the content of the acrylate in the silicone active material is 3-15 parts by weight;
A(IV): catalyst
wherein the catalyst is selected from a platinum-alcohol complex, a platinum-olefin complex, a platinum-alkoxide complex, a platinum-ether complex, a platinum-ketone complex, a chloroplatinic acid solution in isopropanol or a platinum-vinyl complex, and preferably a chloroplatinic acid solution in isopropanol in which the platinum content is from 1 to 20 ppm; and the amount of the catalyst in the silicone active material is 0.01-0.2% by weight;
A(V): silica
wherein the silica comprises fumed silica or precipitated silica having a specific surface area of 50-500 m²/g, and preferably precipitated silica or fumed silica having a specific surface area of 90 to 300 m²/g; and the content of the silica in the silicone active material is 1-15 parts by weight; and
A(VI): silicone resin
wherein the silicone resin is an MQ resin composed of a unit comprising the segment CH₃SiO_{1/2} (the unit M) and the segment SiO_{4/2} (the unit Q), in which the molar ratio of the unit M to the unit Q is (0.4-1.2):1.0, and preferably (0.5-0.8):1.0; and the content of the MQ resin in the silicone active material is 5-20 parts by weight.

9. A method for preparing the silicone defoamer composition according to any one of claims 1 to 8, wherein the component C is added in two steps, the component C1 is added in the first step, and the components C2 and C3 are added in the second step.

10. The method for preparing the silicone defoamer composition according to claim 9, comprising the steps of:
(1) mixing the silicone active material A with the component B, heating to 50-150°C, and stirring for 0.5-1.5 hrs at a speed of 100-600 rpm;
(2) adding the component C1 with stirring while the temperature is kept unchanged; and
(3) homogenizing the mixture by a colloid mill, combining the mixture with the components C2 and C3, and stirring until uniform, to obtain a defoamer product.

## Patentansprüche

1. Siliziumorganische Entschäumerzusammensetzung, **dadurch gekennzeichnet, dass** sie aus folgenden Substanzen besteht:
- A. einem siliziumorganischen Wirkstoff mit einem Gehalt von 5 bis 40 Gewichtsteilen in Bezug auf die Entschäumerzusammensetzung, wobei der siliziumorganische Wirkstoff der Komponente A aus wasserstoffhaltigem Polysiloxan, Acrylat, α-Olefin, Katalysator, Siliziumdioxid und organischem Silikonharz hergestellt ist,
- B. Polyether-Polydiorganosiloxan
wobei das Polyether-Polydiorganosiloxan die folgende allgemeine Strukturformel aufweist und der Gehalt am Polyether-Polydiorganosiloxan in der Entschäumerzusammensetzung 10 bis 70 Gewichtsteile beträgt, 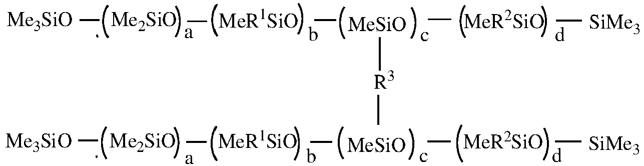
wobei Me für Methyl, A für eine ganze Zahl von 20 bis 300, B für eine ganze Zahl von 2 bis 100, C für eine ganze Zahl von 0 bis 100 und D für eine ganze Zahl von 2 bis 100 stehen,
wobei R¹ für ein Polyethersegment steht, wobei ein durch Copolymerisation von Ethylenoxid-Propylenoxid erhaltenes Copolymer durch eine Hydrosilylierungsreaktion zwischen Polyether mit ungesättigten Doppelbindungen und Si-H auf eine Siloxanhauptkette gepfropft wird, wobei der Polyether mit ungesättigten Doppelbindungen die folgende allgemeine Formel aufweist: CH₂=CHCH2O (EO)ₓ(PO)_{y}R⁴, wobei R⁴ für Alkyl, Ester, Epoxy oder Amino mit 1 bis 6 Wasserstoffatomen und Kohlenstoffatomen, EO für Ethylenoxid, PO für Propylenoxid, x und y für Polymerisationsgrad, X für eine ganze Zahl von 0 bis 150, vorzugsweise eine ganze Zahl von 0 bis 40 und Y für eine ganze Zahl von 0 bis 150, vorzugsweise eine ganze Zahl von 0 bis 100 stehen, wobei x und y nicht gleichzeitig bei 0 liegen,
wobei R² für eine aliphatische Kohlenwasserstoffgruppe mit der Strukturformel -(CH₂)_{z}H steht, wobei es sich bei z um eine ganze Zahl von 1 bis 36 handelt, wobei konkret durch eine Hydrosilylierungsreaktion zwischen Olefin mit ungesättigter Doppelbindung und Si-H ein Pfropfen auf die Siloxanhauptkette erfolgt, wobei das ungesättigte Doppelbindungen enthaltende Olefin ein α-Olefin mit der Strukturformel CH₂=CH(CH₂)_{z}H ist, wobei z für eine ganze Zahl von 1 bis 36, vorzugsweise 1 oder 6 bis 18 steht,
wobei R³ für Polydimethylsiloxan mit endständigen Divinyl-Gruppen steht, bei dem es sich um ein modifiziertes Polysiloxan mit vernetzter Struktur, die sich aus einer Hydrosilylierungsreaktion zwischen einem Polyorganosiloxan mit endständigen Divinyl-Gruppen und Si-H ergibt, handelt, wobei das Polyorganosiloxan mit endständigen Divinyl-Gruppen die folgende allgemeine Strukturformel aufweist: CH₂=CH (CH₃)₂SiO((CH₃)₂SiO)ₘSi(CH₃)₂CH=CH₂, wobei m für eine ganze Zahl von 100 bis 500, vorzugsweise eine ganze Zahl von 200 bis 400 steht, wobei die kinematische Viskosität des Polyorganosiloxans mit endständigen Divinyl-Gruppen bei 25°C 50 bis 2000 mPas•s beträgt,
und wobei die Komponente B aus einer Kombination von folgenden drei Polyether-Polydiorganosiloxanen mit verschiedenen Strukturen besteht:
- B1: dabei stehen c für eine ganze Zahl von 2 bis 100, z für eine ganze Zahl von 6 bis 18 und m für eine ganze Zahl von 200 bis 400,
- B2: dabei stehen c für eine ganze Zahl von 2 bis 100, R² für Methyl und m für eine ganze Zahl von 200 bis 400,
- B3: dabei stehen c für 0 und z für eine ganze Zahl von 6 bis 18, wobei die durchschnittliche kinematische Viskosität bei 25°C 10 bis 30.000 mPas•s, vorzugsweise 100 bis 3.000 mPas•s beträgt,
C. Polyetherpolyol
das Polyetherpolyol hat die folgende allgemeine Formel: R⁵[(EO)ₕ(PO)ₙH]_{g} und weist einen Gehalt von 10 bis 80 Gewichtsteilen in Bezug auf die Entschäumerzusammensetzung auf,
wobei das tiefgestellte Zeichen g für eine ganze Zahl von 1 bis 6, vorzugsweise eine ganze Zahl von 1 bis 3, h und n für Polymerisationsgrad, h für eine ganze Zahl von 1 bis 100, vorzugsweise 1 bis 40, n für eine ganze Zahl von 0 bis 80, vorzugsweise 0 bis 60, EO für Ethylenoxid, PO für Propylenoxid, R⁵ für Reaktionsrückstand des Polyetherinitiators stehen, wobei es sich bei dem Initiator um linearen oder verzweigten Alkylalkohol mit C1 bis C30, vorzugsweise linearen Alkylalkohol, Ethylenglykol, Propylenglykol, Glycerol und Glyceroltrimethylolpropan mit C16 bis C18 handelt,
und wobei die Komponente C aus einer Kombination von folgenden drei Polyetherpolyolen mit verschiedenen Strukturen besteht:
C1: dabei handelt es sich bei g um 1, bei h um 0, bei n um eine ganze Zahl von 5 bis 40 und bei dem Initiator um Propylenglykol,
C2: dabei handelt es sich bei g um 3, bei h um eine ganze Zahl von 10 bis 40, bei n um eine ganze Zahl von 0 bis 80 und bei dem Initiator um Glycerin,
C3: dabei handelt es sich bei g um 1, bei h um eine ganze Zahl von 10 bis 40, bei n um eine ganze Zahl von 0 bis 80 und bei dem Initiator um linearen Alkylalkohol mit C 16 bis C18.

2. Siliziumorganische Entschäumerzusammensetzung nach Anspruch 1, **dadurch gekennzeichnet, dass** B1 und B2 für vernetztes Polyether-Polydiorganosiloxan stehen, wobei die durchschnittliche kinematische Viskosität bei 25°C 10 bis 40.000 mPas•s, vorzugsweise 100 bis 4.000 mPas•s beträgt.

3. Siliziumorganische Entschäumerzusammensetzung nach Anspruch 2, **dadurch gekennzeichnet, dass** der Gehalt an B1 in der Entschäumerzusammensetzung 5 bis 40 Gewichtsteile, vorzugsweise 5 bis 35 Teile, insbesondere bevorzugterweise 8 bis 25 Teile beträgt, wobei der Gehalt an B2 in der Entschäumerzusammensetzung 2 bis 30 Gewichtsteile, vorzugsweise 5 bis 25 Gewichtsteile, insbesondere bevorzugterweise 5 bis 20 Gewichtsteile beträgt, wobei der Gehalt an B3 in der Entschäumerzusammensetzung 2 bis 30 Gewichtsteile, vorzugsweise 5 bis 25 Gewichtsteile, insbesondere bevorzugterweise 5 bis 20 Gewichtsteile beträgt, wobei der Gehalt an C1 in der Entschäumerzusammensetzung 2 bis 30 Gewichtsteile, vorzugsweise 5 bis 25 Gewichtsteile, insbesondere bevorzugterweise 5 bis 20 Gewichtsteile beträgt, wobei der Gehalt an C2 in der Entschäumerzusammensetzung 2 bis 30 Gewichtsteile, vorzugsweise 5 bis 25 Gewichtsteile, insbesondere bevorzugterweise 5 bis 20 Gewichtsteile beträgt, und wobei der Gehalt an C3 in der Entschäumerzusammensetzung 2 bis 30 Gewichtsteile, vorzugsweise 5 bis 25 Gewichtsteile, insbesondere bevorzugterweise 5 bis 20 Gewichtsteile beträgt.

4. Siliziumorganische Entschäumerzusammensetzung nach Anspruch 3, **dadurch gekennzeichnet, dass** sie aus folgenden Substanzen mit den angegebenen Verhältnissen besteht:
- A. einem siliziumorganischen Wirkstoff mit einem Gehalt von 5 bis 35 Gewichtsteilen in Bezug auf die Entschäumerzusammensetzung,
- B. einem Polyether-Polydiorganosiloxan mit einem Gehalt von 15 bis 60 Gewichtsteilen in Bezug auf die Entschäumerzusammensetzung,
- C. einem Polyetherpolyol mit einem Gehalt von 20 bis 70 Gewichtsteilen in Bezug auf die Entschäumerzusammensetzung.

5. Siliziumorganische Entschäumerzusammensetzung nach Anspruch 4, **dadurch gekennzeichnet, dass** sie aus folgenden Substanzen mit den angegebenen Verhältnissen besteht:
- A. einem siliziumorganischen Wirkstoff mit einem Gehalt von 8 bis 25 Gewichtsteilen in Bezug auf die Entschäumerzusammensetzung,
- B. einem Polyether-Polydiorganosiloxan mit einem Gehalt von 15 bis 40 Gewichtsteilen in Bezug auf die Entschäumerzusammensetzung,
- C. einem Polyetherpolyol mit einem Gehalt von 35 bis 65 Gewichtsteilen in Bezug auf die Entschäumerzusammensetzung.

6. Siliziumorganische Entschäumerzusammensetzung nach Anspruch 1, **dadurch gekennzeichnet, dass** die Komponente B durch eine Reaktion der modifizierten Gruppen R¹, R² und R³ mit wasserstoffhaltigem Polyorganosiloxan unter Einwirkung eines Katalysators hergestellt wird, wobei verschiedene modifizierte Gruppen durch eine ataktische Polymerisation auf die Hauptkette des wasserstoffhaltigen Polyorganosiloxans aufgepfropft werden, und wobei das wasserstoffhaltige Polyorganosiloxan mindestens ein wasserstoffhaltiges Polyorganosiloxan mit der folgenden allgemeinen Strukturformel ist:
Me₃SiO(MeHSiO)ₚ(Me₂SiO)_{q}SiMe₃
wobei Me für Methyl, p für eine ganze Zahl von 2 bis 100, vorzugsweise von 10 bis 70 und Q für eine ganze Zahl von 20 bis 300, vorzugsweise 40 bis 200 stehen, wobei jedes Molekül mindestens 2 siliziumgebundene Wasserstoffatome aufweist, und wobei die kinematische Viskosität des wasserstoffhaltigen Polyorganosiloxans bei 25°C 20 bis 5.000 mpas•s beträgt.

7. Siliziumorganische Entschäumerzusammensetzung nach Anspruch 6, **dadurch gekennzeichnet, dass** der Katalysator aus einer der Substanzen Platin-Alkohol-Komplex, Platin-Olefin-Komplex, Platin-Alkoxid-Komplex, Platin-Ether-Komplex, Platin-Keton-Komplex, Chloroplatinsäure-Isopropanol-Lösung oder Platin-Vinyl-Komplex ausgewählt wird, wobei vorzugsweise eine Chlorplatinsäure-Isopropanol-Lösung mit einem Platingehalt von 1-20 ppm verwendet wird, und wobei der Gehalt an Katalysator in Polyether-Polydiorganosiloxan 0,01 bis 0,2% in Bezug auf die Gesamtmasse beträgt.

8. Siliziumorganische Entschäumerzusammensetzung nach Anspruch 1, **dadurch gekennzeichnet, dass** der siliziumorganische Wirkstoff der Komponente A unter Verwendung von wasserstoffhaltigem Polyorganosiloxan, Acrylat, α-Olefin, Katalysator, Siliziumdioxid und organischem Silikonharz hergestellt wird,
A(I): wasserstoffhaltiges Polyorganosiloxan:
mindestens ein wasserstoffhaltiges Polyorganosiloxan mit der folgenden allgemeinen Strukturformel:
HₖMe₃₋ₖSiO(MeHSiO)ᵥ(Me₂SiO)_{w}SiMe₃₋ₖHₖ
dabei stehen Me für Methyl, das tiefgestellte Zeichen für 0 oder 1, v für eine ganze Zahl von 2 bis 100 und w für eine ganze Zahl von 20 bis 300, wobei jedes Molekül mindestens 2 siliziumgebundene Wasserstoffatome aufweist, und wobei der Gehalt an wasserstoffhaltigem Polyorganosiloxan im siliziumorganischen Wirkstoff 40 bis 80 Gewichtsteile beträgt,
A(II): α-Olefin
die allgemeine Strukturformel des α-Olefins lautet wie folgt:
Vi(CH₂)ₜH
dabei stehen Vi für Vinyl und t für eine ganze Zahl von 1 bis 36, vorzugsweise eine ganze Zahl von 6 bis 18; der Gehalt an α-Olefin im siliziumorganischen Wirkstoff beträgt 10 bis 30 Teile,
A(III): Acrylat
der Acrylester ist ein Ester von Acrylsäure und deren Homologen und umfasst Methylacrylat, Ethylacrylat, Butylacrylat, Isobutylacrylat, 2-Methylmethacrylat, 2-Ethylmethacrylat oder 2-Butylmethacrylat, wobei der Gehalt an Acrylat im siliziumorganischen Wirkstoff 3 bis 15 Gewichtsteile beträgt,
A(IV): Katalysator
der Katalysator wird aus Platin-Alkohol-Komplex, Platin-Olefin-Komplex, Platin-Alkoxid-Komplex, Platin-Ether-Komplex, Platin-Keton-Komplex, Chloroplatinsäure-Isopropanol-Lösung oder Platin-Vinyl-Komplex; vorzugsweise wird eine Chlorplatinsäure-Isopropanol-Lösung mit einem Platingehalt von 1 bis 20 ppm verwendet; der Gehalt am Katalysator im siliziumorganischen Wirkstoff beträgt 0,01 bis 0,2 Prozent,
A(V): Siliziumdioxid
das Siliziumdioxid umfasst gasförmiges Siliziumdioxid oder gefälltes Siliziumdioxid mit einer spezifischen Oberfläche von 50 bis 500 m²/g, vorzugsweise 90 bis 300 m²/g; der Gehalt am Siliziumdioxid im organischen Siliziumwirkstoff beträgt 1 bis 15 Gewichtsteile,
A(VI): organisches Silikonharz
das organische Silikonharz ist ein MQ-Harz, das aus CH₃SiO_{1/2}, also der Einheit M, und SiO_{4/2}, also der Einheit Q, besteht, und das Molverhältnis zwischen der Einheit M und der Einheit Q beträgt (0,4 bis 1,2): 1,0, vorzugsweise (0,5 bis 0,8): 1,0; der Gehalt an MQ-Harz im siliziumorganischen Wirkstoff beträgt 5 bis 20 Gewichtsteile.

9. Herstellungsverfahren der Entschäumerzusammensetzung nach einem der Ansprüche 1 bis 8, **dadurch gekennzeichnet, dass** die Komponente C in zwei Schritten zugegeben wird, wobei in dem ersten Schritt die Komponente C1 und in dem zweiten Schritt die Komponenten C2 und C3 zugegeben werden.

10. Herstellungsverfahren der Entschäumerzusammensetzung nach Anspruch 9, **dadurch gekennzeichnet, dass** es die folgenden Schritte umfasst:
- (1) Mischen des siliziumorganischen Wirkstoffs A und der Komponente B, Erhitzen auf 50 bis 150°C, Rühren für 0,5 bis 1,5 Stunden bei einer Drehzahl von 100 bis 600 U/min,
- (2) Beibehalten der Temperatur und Zugeben der Komponente C1 unter Rühren,
- (3) Durchmischen der Komponente C2 und der Komponente C3 nach Homogenisieren der Mischung mittels einer Kolloidmühle, um das Entschäumerprodukt zu erhalten.

## Revendications

1. Une composition d'agent antimousse à base de silicium organique, **caractérisée en ce que**, elle est constituée des matières suivantes :
A. Une matière active de silicium organique, dont la teneur en parties en poids de la matière active de silicium organique dans la composition d'agent anti-mousse est de 5∼40 parties, la matière active dudit ingrédient A étant composée de polysiloxane contenant de l'hydrogène, d'acrylate, d'alpha-oléfine, d'un catalyseur, de dioxyde de silicium et de résine de silicium organique ;
B. Un polyéther-polydiorganosiloxane
Ledit polyéther-polydiorganosiloxane ayant la formule générale structurale suivante, et la teneur en parties en poids du polyéther-polydiorganosiloxane dans la composition d'agent antimousse étant de 10∼70 parties : 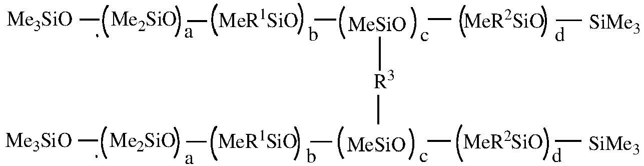
Dans laquelle : Me est un groupe méthyle, a est un nombre entier de 20∼300, b est un nombre entier de 2∼100, c est un nombre entier de 0∼100, d est un nombre entier de 2∼100 ;
R¹ représente un segment de polyéther, et un copolymère obtenu par copolymérisation d'oxyde d'éthylène et d'oxyde de propylène greffé à la chaîne principale d'un siloxane par réaction d'hydrosilylation d'un polyéther contenant une double liaison insaturée et de Si-H, le polyéther à double liaison insaturée ayant la formule générale suivante :
CH₂=CHCH₂O(EO)ₓ(PO)_{y}R⁴ ; dans laquelle R⁴ représente un atome d'hydrogène, un groupe alcane à 1∼6 atomes de carbone, un groupe ester, un groupe époxy ou un groupe amino ; EO est un oxyde d'éthylène, PO est un oxyde de propylène, x et y représentent des degrés de polymérisation, x étant un nombre entier de 0∼150, préférablement un nombre entier de 0∼40 ; y étant un nombre entier de 0∼150, préférablement un nombre entier de 0-100 ; x et y n'étant pas simultanément de 0 ;
R² est un groupe hydrocarboné aliphatique doté de la formule structurale -(CH₂)_{z}H, z étant un nombre entier de 1∼36 ; concrètement il s'agit d'une greffe sur la chaîne principale d'un siloxane par réaction d'hydrosilylation d'un oléfine contenant une double liaison insaturée et de Si-H, l'oléfine à double liaison insaturée est une alpha-oléfine dont la formule structurale est CH₂ = CH(CH₂)_{z}H, z étant un nombre entier de 0∼36, préférablement un nombre entier de 1 ou de 6∼18 ;
R³ est un polydiméthylsiloxane terminé par groupe divinyle subissant une réaction d'hydrosilylation avec le Si-H via un polyorganosiloxane terminé par groupe divinyle pour obtenir un polysiloxane modifié doté d'une structure réticulée, le polyorganosiloxane terminé par groupe divinyle est doté de la formule générale structurale suivante : CH₂ = CH(CH₃)₂SiO((CH₃)₂SiO)ₘSi(CH₃)₂CH = CH₂ ; m étant un nombre entier de 100∼500, préférablement un nombre entier de 200∼400 ; ledit polyorganosiloxane terminé par groupe divinyle est doté d'une viscosité cinématique à 25°C de 50∼2000 mPa·s ;
En outre : l'ingrédient B comprend la combinaison des trois structures différentes de polyéther-polydiorganosiloxane :
B1 : c est un nombre entier de 2∼100, z est un nombre entier de 6∼18, m est un nombre entier de 200∼400 ;
B2 : c est un nombre entier de 2∼100, R² est un groupe méthyle, m est un nombre entier 200∼400 ;
B3 : c est de 0, z est un nombre entier de 6∼18 ; la viscosité cinématique à 25°C étant de 10∼30 000 mPa·s, préférablement de 100∼3000 mPa·s ;
C. Polyol de polyéther
La structure du polyol de polyéther est dotée de la formule générale : R⁵[(EO)ₘ(PO)ₙH]_{g} ; la teneur en parties en poids du polyol de polyéther dans la composition d'agent antimousse est de 10∼80 parties ;
Dans lequel : l'indice g est un nombre entier de 1∼6, préférablement un nombre entier de 1∼3 ; h et n représentent les degrés de polymérisation, m est un nombre entier de 1∼100, préférablement un nombre entier de 1∼40, n est un nombre entier de 0∼80, préférablement un nombre entier de 0∼60 ; EO un oxyde d'éthylène, PO est un oxyde de propylène ; R⁵ est un résidu de réaction d'un initiateur de polyéther, l'initiateur étant un alcool d'alkyle linéaire ou ramifié de C1∼C30, préférablement un alcool d'alkyle, un éthylène glycol, un propylène glycol, un glycérol ou un glycérol triméthylolpropane linéaire de C16-C18 ;En outre : l'ingrédient C comprend la combinaison des trois structures différentes de polyol de polyéther :
C1 : g est de 1, h est de 0, n est un nombre entier de 5∼40, l'initiateur étant un propylène glycol ;
C2 : g est de 3, h est un nombre entier de 10∼40, n est un nombre entier de 0∼80, l'initiateur étant le glycérol ;
C3 : g est de 1, h est un nombre entier de 10∼40, n est un nombre entier de 0∼80, l'initiateur étant un alcool d'alkyle linéaire de C16-C18.

2. Une composition d'agent antimousse à base de silicium organique selon la revendication 1, **caractérisée en ce que** B1 et B2 sont des polyéther-polydiorganosiloxanes réticulés ; la viscosité cinématique moyenne à 25°C étant de 20∼40 000 mPa·s, préférablement de 100∼4000 mPa·s.

3. Une composition d'agent antimousse à base de silicium organique selon la revendication 2, **caractérisée en ce que** la teneur en parties en poids de B1 dans la composition d'agent antimousse est de 5∼40 parties, préférablement 5∼35 parties, plus préférablement 8∼25 parties ; la teneur en parties en poids de B2 dans la composition d'agent antimousse est de 2∼30 parties, préférablement 5∼25 parties, plus préférablement 5∼20 parties ; la teneur en parties en poids de B3 dans la composition d'agent antimousse est de 2∼20 parties, préférablement 2∼15 parties, plus préférablement 2∼10 parties ; la teneur en parties en poids de C1 dans la composition d'agent antimousse est de 5∼50 parties, préférablement 10∼40 parties, plus préférablement 15∼35 parties ; la teneur en parties en poids de C2 dans la composition d'agent antimousse est de 2∼40 parties, préférablement 5∼35 parties, plus préférablement 5∼20 parties ; la teneur en parties en poids de C3 dans la composition d'agent antimousse est de 2∼40 parties, préférablement 5∼35 parties, plus préférablement 5∼20 parties.

4. Une composition d'agent antimousse à base de silicium organique selon la revendication 3, **caractérisée en ce que** le rapport de composition de matière est de :
A. Une matière active de silicium organique, la teneur en parties en poids de la matière active de silicium organique dans la composition d'agent anti-mousse étant de 5∼35 parties ;
B. Un polyéther-polydiorganosiloxane, la teneur en parties en poids du polyéther-polydiorganosiloxane dans la composition d'agent antimousse étant de 15∼60 parties;
C. Un polyol de polyéther, la teneur en parties en poids du polyol de polyéther dans la composition d'agent antimousse étant de 20∼70 parties.

5. Une composition d'agent antimousse à base de silicium organique selon la revendication 4, **caractérisée en ce que** le rapport de composition des matières est de :
A. Une matière active de silicium organique, la teneur en parties en poids de la matière active de silicium organique dans la composition d'agent anti-mousse étant de 8∼25 parties ;
B. Un polyéther-polydiorganosiloxane, la teneur en parties en poids du polyéther-polydiorganosiloxane dans la composition d'agent antimousse étant de 15∼40 parties;
C. Un polyol de polyéther, la teneur en parties en poids du polyol de polyéther dans la composition d'agent antimousse étant de 35∼65 parties.

6. Une composition d'agent antimousse à base de silicium organique selon la revendication 1, **caractérisée en ce que** ledit ingrédient B est préparé par réaction des groupes R¹, R² et R³ modifiés avec un polyorganosiloxane contenant de l'hydrogène sous l'action d'un catalyseur, dans laquelle tous les groupes modifiés sont greffés par polymérisation aléatoire sur la chaîne principale de polyorganosiloxane contenant de l'hydrogène ; ledit polyorganosiloxane contenant de l'hydrogène relève au moins de la formule générale structurale suivante :
Me₃SiO(MeHSiO)ₚ(Me₂SiO)_{q}SiMe₃
Dans laquelle Me est un groupe méthyle, p est un nombre entier de 2∼100, préférablement un nombre entier de 10-70 ; q est un nombre entier de 20∼300, préférablement un nombre entier de 40-200 ; chaque molécule étant dotée d'au moins 2 atomes d'hydrogène à liaison de silicium ; la viscosité cinématique à 25°C du polyorganosiloxane contenant de l'hydrogène étant de 20∼5000 mPa·s.

7. Une composition d'agent antimousse à base de silicium organique selon la revendication 6, **caractérisée en ce que** ledit catalyseur peut être choisi entre un complexe platine-alcool, un complexe platine-oléfine, un complexe platine-alcoolate, un complexe platine-éther, un complexe platine-cétone, une solution d'acide chloroplatinique-isopropanol ou un complexe platine-vinyle ; préférablement une solution d'acide chloroplatinique-isopropanol dont la teneur en platine est de 1∼20 ppm ; la quantité massique du catalyseur dans le polyéther-polydiorganosiloxane représentant 0,01∼0.2% de la masse totale.

8. Une composition d'agent antimousse à base de silicium organique selon la revendication 1, **caractérisée en ce que** la matière active de silicium organique dudit ingrédient A est préparée à l'aide de polyorganosiloxane contenant de l'hydrogène, d'acrylate, d'alpha-oléfine, d'un catalyseur, de dioxyde de silicium et de résine de silicium organique ;
A (I) : polyorganosiloxane contenant de l'hydrogène :
Un polyorganosiloxane contenant de l'hydrogène relevant au moins de la formule générale structurale suivante :
HₖMe₃₋ₖSiO(MeHSiO)ᵥ(Me₂SiO)_{w}SiMe₃₋ₖHₖ
Me représentant le groupe méthyle, l'indice k étant de 0 ou de 1, v étant un nombre entier de 2∼100, w étant un nombre entier de 20∼300, chaque molécule étant dotée d'au moins 2 atomes d'hydrogène à liaison de silicium ; la teneur en parties en poids du polyorganosiloxane contenant de l'hydrogène dans ladite matière active de silicium organique étant de 40∼80 parties ;
A (II) : alpha-oléfine
La formule générale structurale de ladite alpha-oléfine est la suivante :
Vi(CH₂)ₜH
Vi représente le groupe vinyle, t est un nombre entier de 1∼36, préférablement un nombre entier de 6∼18 ; la teneur en parties en poids de l'alpha-oléfine dans ladite matière active de silicium organique étant de 10∼30 parties ;
A (III) : Acrylate
Ledit acrylate est un ester de l'acide acrylique et de ses homologues, il comprend l'acrylate de méthyle, l'acrylate d'éthyle, l'acrylate de butyle, l'acrylate d'isobutyle, le méthacrylate de 2-méthyle, le méthacrylate de 2-éthyle ou le méthacrylate de 2-butyle ; la teneur en parties en poids de l'acrylate dans ladite matière active de silicium organique étant de 3∼15 parties ;
A (IV) : catalyseur
Ledit catalyseur peut être choisi entre un complexe platine-alcool, un complexe platine-oléfine, un complexe platine-alcoolate, un complexe platine-éther, un complexe platine-cétone, une solution d'acide chloroplatinique-isopropanol ou un complexe platine-vinyle ; préférablement une solution d'acide chloroplatinique-isopropanol dont la teneur en platine est de 1∼20 ppm ; la quantité massique du catalyseur dans ladite matière active de silicium organique étant de 0,01∼0.2% de la masse totale.
A (V) : dioxyde de silicium
Ledit dioxyde de silicium comprend le dioxyde de silicium en phase gazeuse ou le dioxyde de silicium précipité, dont la surface spécifique est de 50∼500 m²/g, préférablement un dioxyde de silicium précipité ou dioxyde de silicium en phase gazeuse dont la surface spécifique est de 90∼300 m²/g ; la teneur en parties en poids du dioxyde de silicium dans ladite matière active de silicium organique étant de 1∼15 parties ;
A (VI) : résine de silicium organique
Ladite résine de silicium organique est une résine MQ constituée d'une unité de chaîne CH3SiO1/2, soit une unité M et une chaîne SiO4/2, soit une unité d'unité Q, le rapport molaire entre l'unité M et l'unité Q étant de (0,4∼1,2) : 1,0, préférablement de (0,5∼0,8) : 1,0 ; la teneur en parties en poids de la résine MQ dans ladite matière active de silicium organique étant de 5∼20 parties ;

9. Un procédé de préparation de ladite composition d'agent antimousse à base de silicium organique selon l'une quelconque des revendications 1 à 8, **caractérisé en ce que** ledit ingrédient C est ajouté en deux étapes, dans la première étape l'ingrédient C1 est ajouté, et dans la deuxième étape les ingrédients C2 et C3 sont ajoutés.

10. Un procédé de préparation de ladite composition d'agent antimousse à base de silicium organique selon la revendication 9, **caractérisé en ce que**, il comprend les étapes suivantes :
(1) La matière active de silicium organique A et l'ingrédient B susmentionnés sont mélangés, la température est augmentée à 50∼150°C, un mélange est effectué durant 0,5∼1,5 h, la vitesse de rotation de mélange étant de 100∼600 tpm ;
(2) La température est maintenue constante, et l'ingrédient C1 est ajouté tout en mélangeant ;
(3) Après homogénéisation du mélange ci-dessus à l'aide d'un moulin colloïdal, le mélange est brassé uniformément avec les ingrédients C2 et C3 pour obtenir ledit produit d'agent antimousse.
